# EUROPEAN PATENT SPECIFICATION

(11) **EP 2 676 810 B1**
(45) Date of publication and mention of the grant of the patent: **13.12.2017**
(21) Application number: 13172746.3
(22) Date of filing: 19.06.2013
(51) Int. Cl.: B60C 9/22

(54) **A tire with a segmented overlay layer**
Reifen mit einer segmentierten Bedeckungsschicht
Pneu avec couche de recouvrement segmentée

(30) Priority: 21.06.2012 US 201213528905
(43) Date of publication of application: 25.12.2013
(73) Proprietor: The Goodyear Tire & Rubber Company, Akron, Ohio 44316 (US)
(72) Inventor: Pingenat, Matthieu, F-57290 Fameck (FR); Agostini, Giorgio, L-7733 Colmar-Berg (LU); Colantonio, Luigi Domenico, B-6600 Bastogne (BE); Corvasce, Filomeno Gennaro, 2900 Porrentruy (CH); Deroo, Tony Raymond Gery, F-57330 Hettange Grande (FR); Peronnet-Paquin, Anne Therese, L-2566 Luxembourg (LU); Philpott, Frank, L-5465 Waldbredimus (LU); Schreurs, Damien Albert Ghislain, L-5369 Schuttrange (LU)
(74) Representative: Kutsch, Bernd

(56) References cited:
- FR-A1- 2 964 907
- JP-A- H06 143 917
- JP-A- H08 156 519
- JP-A- 2005 035 345
- JP-A- 2006 182 200
- JP-A- 2008 285 059
- JP-A- 2009 166 650
- JP-A- 2010 042 752
- JP-A- 2011 037 415
- JP-A- 2011 068 324
- US-A1- 2013 048 185

## Description

### Field of Invention

The present invention relates to a pneumatic tire, and more particularly, to a pneumatic tire with tread groove reinforcement.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber are located axially and radially outward, respectively, of the carcass ply.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

The tire tread and tread cap area are other parts of the tire that contribute a substantial amount to the rolling resistance of the tire. Tread groove deformation may lead to subsequent heat buildup in the tread compound during operation of the tire, and vice versa, thereby increasing rolling resistance.

FR-A- 2 964 904 describes a tire having a tread comprising a plurality of circumferential grooves, a carcass and a belt structure between the carcass and the tread, wherein the belt structure comprises a plurality of overlay strips located underneath the circumferential grooves. The width of the overlay strips is wider than the width of the circumferential grooves. The overlay strips are thermoplastic polymer layers.

US-A- 2003/0048185 describes a belt cover layer for a tire constituted by a band-like member in which steel cords are embedded in rubber. Adjacent revolution portions of the band-like member are wound spirally in a circumferential direction.

Each of the documents JP-A-2009 166 650, JP-A-2011 068 324, JP-A-2008 285 059, JP-A-2010 042 752, JP-A-2005 035 345, JP-A-2011 037 415, JP-A-H06 143 917, JP-A-2006 182 200 and JP-A-H08 156 519 describes a pneumatic tire in accordance with the preamble of claim 1.

### Summary of the Invention

The invention relates to a pneumatic tire in accordance with claim 1. Dependent claims refer to preferred embodiments of the invention.

A pneumatic tire in accordance with one aspect of the present in invention may include a pair of axially spaced apart annular bead cores, a carcass ply extending around both bead cores, a tread for engaging a contact surface and a belt structure. The tread is disposed radially outward of the carcass ply. The tread has at least one circumferential groove extending radially inward from a radially outer surface of the tread. The belt structure is disposed radially between the carcass ply and the tread. The belt structure includes at least one belt layer and an overlay comprising at least one overlay layer. The overlay layer is disposed radially between the at least one belt layer and a radially innermost surface of the circumferential groove. The overlay layer is disposed under the circumferential groove and has an axial width between 70% and 200% of an axial width of the circumferential groove. The overlay layer is a reinforced ply or a fabric.

According to one aspect of the pneumatic tire, the overlay layer may have an axial width corresponding to between 100% and 130% of the axial width of the circumferential groove.

According to another aspect of the pneumatic tire, the overlay layer may be a reinforced ply layer comprising parallel cords oriented in the range between - 5 degrees to + 5 degrees relative to an equatorial plane of the pneumatic tire.

According to yet another aspect of the pneumatic tire, the overlay layer may comprise a dipped fabric.

According to still another aspect of the pneumatic tire, the overlay layer may comprise a woven fabric or an unwoven fabric.

According to yet another aspect of the pneumatic tire, the overlay layer may comprise a fabric selected from the group consisting of: a dipped calandered woven fabric, a dipped calandered unwoven fabric, a dipped non-calendered woven fabric, and a dipped non-calendered unwoven fabric.

According to still another aspect of the pneumatic tire, the overlay layer may comprise a material consisting of one or more of: polyester, polyketone, polybenzobisoxazole (PBO), nylon, aramid, and rayon.

According to yet another aspect of the pneumatic tire, the overlay layer may comprise a material consisting of two of: polyester, polyketone, polybenzobisoxazole (PBO), nylon, aramid, and rayon.

According to still another aspect of the pneumatic tire, the overlay layer may comprise a metal, high tensile steel, super tensile steel, ultra tensile steel, or mega tensile steel.

According to yet another aspect of the pneumatic tire, the parallel cords may comprise at least one of: a metal, polyester, aramid, rayon, and nylon.

According to still another aspect of the pneumatic tire, the overlay layer may comprise a material consisting of two of: polyester, polyketone, polybenzobisoxazole (PBO), nylon, aramid, rayon, high tensile steel, super tensile steel, ultra tensile steel, and mega tensile steel.

According to yet another aspect of the pneumatic tire, the overlay layer may comprise a material consisting of at least one of: polyester, polyketone, polybenzobisoxazole (PBO), nylon, aramid, and rayon; and a material consisting of at least one of: high tensile steel, super tensile steel, ultra tensile steel, and mega tensile steel.

According to still another aspect of the pneumatic tire, the carcass ply may be wrapped around each bead core and may have a pair of carcass ply turnups substantially contiguous with the carcass ply from the bead core to radially outer ends of the pair of carcass ply turnups.

According to yet another aspect of the pneumatic tire, the overlay layer may comprise a plurality of axially segmented (or spaced) overlay layers, at least one of the plurality of axially segmented overlay layers being disposed under the circumferential groove, each of the plurality of axially segmented overlay layers having an axial width corresponding to between 70% and 200% or 100% and 130% of an axial width of the circumferential groove.

According to still another aspect of the pneumatic tire, the tread may comprise a plurality of circumferential grooves extending radially inward from a radially outer surface of the tread, the overlay layer comprising a plurality of axially segmented overlay layers, each of the plurality of axially segmented overlay layers having an axial width corresponding to between 70% and 200% or 100% and 130% of a maximum of the axial widths of the circumferential grooves.

According to yet another aspect of the pneumatic tire, the tread may comprise a plurality of circumferential grooves extending radially inward from a radially outer surface of the tread, the overlay layer comprising a plurality of axially segmented overlay layers, one of the axially segmented overlay layers being disposed under each of the circumferential grooves, each of the plurality of axially segmented overlay layers having an axial width corresponding to between 70% and 200% or 100% and 130% the axial width of the corresponding circumferential groove under which it is disposed.

According to still another aspect of the pneumatic tire, the number of axially segmented overlay layers may correspond to the number of circumferential grooves.

According to yet another aspect of the pneumatic tire, the number of axially segmented overlay layers may be less than the number of circumferential grooves or the number of axially segmented overlay layers may be higher than the number of circumferential grooves.

According to still another aspect of the pneumatic tire, the tread may comprise a plurality of circumferential grooves extending radially inward from a radially outer surface of the tread, an axial arrangement of the at least one overlay layer being asymmetric with respect to an equatorial plane of the tire.

According to yet another aspect of the pneumatic tire, the tread may comprise a plurality of circumferential grooves extending radially inward from a radially outer surface of the tread, an axial arrangement of the at least one overlay layer being symmetric with respect to an equatorial plane of the tire.

### Definitions

The following definitions are controlling for the present invention.

"Annular" means formed like a ring.

"Axial" and "axially" are used herein to refer to lines or directions that are parallel to the axis of rotation of the tire.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"High Tensile Steel (HT)" means a carbon steel with a tensile strength of at least 3400 MPa at 0.20 mm filament diameter.

"Inner" means toward the inside of the tire and "outer" means toward its exterior.

"Mega Tensile Steel (MT)" means a carbon steel with a tensile strength of at least 4500 MPa at 0.20 mm filament diameter.

"Normal Tensile Steel (NT)" means a carbon steel with a tensile strength of at least 2800 MPa at 0.20 mm filament diameter.

"Radial" and "radially" are used to mean directions radially toward or away from the axis of rotation of the tire.

"Super Tensile Steel (ST)" means a carbon steel with a tensile strength of at least 3650 MPa at 0.20 mm filament diameter.

"Ultra Tensile Steel (UT)" means a carbon steel with a tensile strength of at least 4000 MPa at 0.20 mm filament diameter.

### Brief Description of the Drawings

The structure, operation, and advantages of the invention will become more apparent upon contemplation of the following description taken in conjunction with the accompanying drawings, wherein:

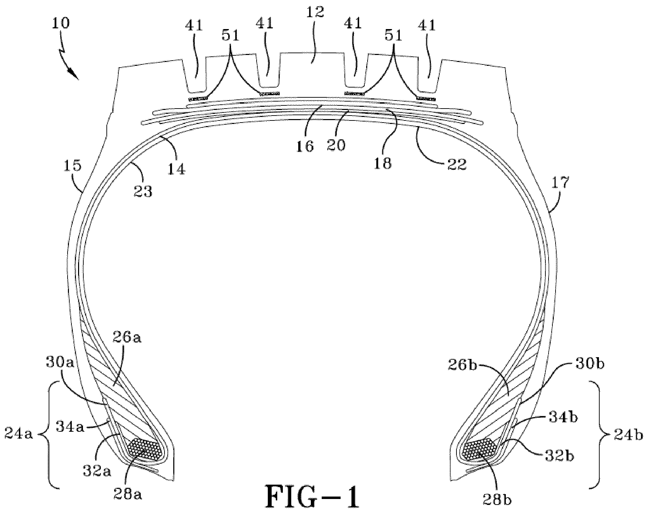

FIG. 1 represents a schematic cross-sectional view of an example tire for use with the overlay layer of the present invention.

### Detailed Description of Example Embodiments of the Invention

FIG. 1 shows an example tire 10 for use with an overlay layer in accordance with the present invention. The example tire 10 has a tread 12, an inner liner 23, a belt structure comprising in the example of three belts 16, 18, 20 and an overlay comprising at least one but preferably a plurality (four in FIG. 1) of axially segmented (or spaced) overlay layers 51, a carcass 22 with a carcass ply 14, two sidewalls 15, 17, and two bead regions 24a, 24b preferably comprising bead filler apexes 26a, 26b and beads 28a, 28b. The example tire 10 is suitable, for example, for mounting on a rim of a passenger vehicle. Preferaby, the tread 12 comprises a tread cap layer and an underlying tread base layer. The carcass ply 14 includes a pair of axially opposite end portions 30a, 30b, each of which is preferably secured to a respective one of the beads 28a, 28b. Preferably, each axial end portion 30a or 30b of the carcass ply 14 is turned up and around the respective bead 28a, 28b to a position sufficient to anchor each axial end portion 30a, 30b.

The carcass ply 14 may be a rubberized ply having a plurality of substantially parallel carcass reinforcing members made of such material as polyester, rayon, or similar suitable organic polymeric compounds. The turned up portions of the carcass ply 14 may engage the axial outer surfaces of two flippers 32a, 32b and axial inner surfaces of two chippers 34a, 34b.

As shown in FIG. 1, the example tread 12 has four, or alternatively two, three, five or six, circumferential grooves 41. The main portion of the tread 12 may be formed of a compound, which may be any suitable tread compound or compounds. Each circumferential groove 41 may be defined by a bottom or base laterally/axially separating a pair of radially extending walls (U-shaped).

The specific composition and physical properties of the compound of the tread 12 and additional overlay layers 51 in accordance with the present invention, and the relationships therebetween, will now be discussed. The additional overlay layers 51 are designed to reduce the rolling resistance of the example tire 10.

The additional overlay layer(s) 51 may be added radially over or radially under a full overlay layer, i.e. an overlay layer having an axial width of at least 50%, preferably at least 70% to 110%, of the axial width of the axially widest belt layer 16, 18, 20.

It has been determined that the bottom area of circumferential tread grooves is a large contributor to overall rolling resistance of the tire 10. Moreover, this large contribution may be the result of high distortions in this area (e.g., high hysteresis). In accordance with the present invention, relatively thin overlay layers 51 have been added to the area axially beneath the circumferential grooves 41 and radially outward of the belts 16, 18, 20 (FIG. 1). Alternatively, the overlay layers 51 may be added under just one circumferential groove 41 or any combination of the grooves 41. These layers 51 may thus mitigate distortion in this area and decrease overall rolling resistance of the tire 10. The layers 51 preferably have an axial width equal to, slightly larger than, and/or slightly smaller than (e.g., between 70% and 200%, 70% and 130%, 80% and 120%, 90% and 110%, 95% and 105%, 100% and 130%, etc.) the axial width (e.g., between 5 mm and 20 mm) of the circumferential grooves 41.

Preferably, the layers 51 are plies of parallel or woven cords oriented generally in the circumferential direction of the tire 10 or in the range between - 5 degrees to + 5 degrees relative to the equatorial plane of the tire. The cords may be constructed of polyester, polyketone, polybenzobisoxazole (PBO), nylon, rayon, and/or other suitable organic and/or textile fibers. As stated above, a plurality of overlay layers 51 in accordance with the present invention produces reduced rolling resistance in a pneumatic tire 10. These overlay layers 51 thus enhance the performance of the pneumatic tire 10, even though the complexities of the structure and behavior of the pneumatic tire are such that no complete and satisfactory theory has been propounded. The above description is given in reference to example embodiments of a tire having a tread portion for reducing rolling resistance and increasing fuel economy. However, it is understood that many variations are apparent to one of ordinary skill in the art from a reading of the disclosure of the invention.

## Claims

1. A pneumatic tire comprising a pair of axially spaced apart annular bead cores (28a, 28b); a carcass ply (14); a tread (12) for engaging a contact surface, the tread being disposed radially outward of the carcass ply (14), the tread (12) having at least one circumferential groove (41) extending radially inward from a radially outer surface of the tread (12); and a belt structure disposed radially between the carcass ply (14) and the tread (12), the belt structure comprising at least one belt layer (16, 18, 20) and an overlay comprising at least one overlay layer (51), the overlay layer being disposed radially between the at least one belt layer (16, 18, 20) and the radially innermost surface of the circumferential groove (41), the overlay layer (51) being disposed under the circumferential groove (41) and having an axial width between 70% and 200% of an axial width of the circumferential groove (41), wherein the overlay layer (51) is a reinforced ply layer or a layer comprising a fabric, **characterized in that** (i) the overlay layer (51) comprises a dipped fabric, a woven fabric or an unwoven fabric; and/or **in that** (ii) the tread (12) comprises a plurality of circumferential grooves (41), each extending radially inward from a radially outer surface of the tread (12), wherein the tire (10) comprises a plurality of said overlay layers (51), wherein said overlay layers (51) are axially spaced, wherein the at least two, three or all of the plurality of axially spaced overlay layers (51) are disposed under a respective circumferential groove (41), wherein each of said overlay layers (51) has an axial width corresponding to between 70% and 200% of an axial width of the respective circumferential groove (41), and wherein the number of axially spaced overlay layers (51) is less or higher than the number of circumferential grooves (41).

2. The pneumatic tire as set forth in claim 1 wherein the overlay layer (51) has an axial width corresponding to between 80% and 130% of the axial width of the circumferential groove (41).

3. The pneumatic tire as set forth in claim 1 wherein the overlay layer (51) has an axial width corresponding to between 90% and 120% of the axial width of the circumferential groove (41).

4. The pneumatic tire as set forth in claim 1 wherein the overlay layer (51) has an axial width corresponding to between 100% and 130% of the axial width of the circumferential groove (41).

5. The pneumatic tire as set forth in claim 1 wherein the overlay layer (51) has an axial width corresponding to between 105% and 120% of the axial width of the circumferential groove (41).

6. The pneumatic tire as set forth in at least one of the previous claims wherein the overlay layer (51) is a reinforced ply layer comprising parallel cords oriented in the range between - 5 degrees to + 5 degrees, alternatively between - 1 degrees to + 1 degrees, relative to an equatorial plane of the pneumatic tire (10).

7. The pneumatic tire as set forth in at least one of the previous claims wherein the overlay layer (51) comprises a fabric selected from the group consisting of: a dipped calandered woven fabric, a dipped calandered unwoven fabric, a dipped non-calendered woven fabric, and a dipped non-calendered unwoven fabric.

8. The pneumatic tire as set forth in at least one of the previous claims wherein the overlay layer (51) comprises a material consisting of one or more of: polyester, polyketone, polybenzobisoxazole (PBO), nylon, aramid, rayon, a metal, a high tensile steel, a super tensile steel, an ultra tensile steel, or a mega tensile steel

9. The pneumatic tire as set forth in at least one of the previous claims wherein the overlay layer (51) comprises:
(i) a material consisting of two, three or more of polyester, polyketone, polybenzobisoxazole (PBO), nylon, aramid, and rayon; or
(ii) a material consisting of two, three or more of polyester, polyketone, polybenzobisoxazole (PBO), nylon, aramid, rayon, high tensile steel, super tensile steel, ultra tensile steel, and mega tensile steel; or
(iii) a material consisting of at least one of polyester, polyketone, polybenzobisoxazole (PBO), nylon, aramid, and rayon and consisting of at least one of high tensile steel, super tensile steel, ultra tensile steel, and mega tensile steel.

10. The pneumatic tire as set forth in at least one of the previous claims wherein the carcass ply (14) is wrapped around each bead core (28a, 28b) and has a pair of carcass ply turnups each substantially contiguous with the carcass ply (14) from the bead cores to radially outer ends of the pair of carcass ply turnups.

11. The pneumatic tire as set forth in claim 1 wherein each of said overlay layers (51) has an axial width corresponding to between 80% and 130%, alternatively 90% to 120%, 100% to 130% or 105% to 120%, of the axial width of the respective circumferential groove (41).

12. The pneumatic tire as set forth in claim 1 or 11 wherein the overlay layer (51) comprises said dipped fabric, said woven fabric or said unwoven fabric and wherein the number of axially spaced overlay layers (51) corresponds to the number of circumferential grooves (41).

13. The pneumatic tire of claim 1 or 11 wherein the number of axially spaced overlay layers (51) is 1 or 2 less than the number of circumferential grooves (41); or wherein the number of axially spaced overlay layers (51) is 1 or 2 higher than the number of circumferential grooves (41).

14. The pneumatic tire as set forth in at least one of the previous claims wherein the tread (12) comprises a plurality of circumferential grooves (41) extending radially inward from a radially outer surface of the tread (12), an wherein an axial arrangement of the at least one overlay layer (51) is either asymmetric with respect to an equatorial plane of the tire (10).

15. The pneumatic tire as set forth in at least one of the previous claims 1 to 13 wherein the tread (12) comprises a plurality of circumferential grooves (41) extending radially inward from a radially outer surface of the tread (12), an wherein an axial arrangement of the at least one overlay layer (51) is either symmetric with respect to an equatorial plane of the tire (10).

## Patentansprüche

1. Luftreifen, umfassend ein Paar axial voneinander beabstandeter ringförmiger Wulstkerne (28a, 28b); eine Karkassenlage (14); eine Lauffläche (12) zum Eingriff an einer Kontaktfläche, wobei die Lauffläche radial auswärts von der Karkassenlage (14) angeordnet ist, wobei die Lauffläche (12) mindestens eine Umfangsrille (41) aufweist, die sich von einer radial äußeren Oberfläche der Lauffläche (12) radial einwärts erstreckt; und eine Gürtelstruktur, die radial zwischen der Karkassenlage (14) und der Lauffläche (12) angeordnet ist, wobei die Gürtelstruktur mindestens eine Gürtellage (16, 18, 20) und eine mindestens eine Gürteldecklage (51) umfassende Gürtelabdeckung umfasst, wobei die Gürteldecklage radial zwischen der mindestens einen Gürtellage (16, 18, 20) und der radial innersten Oberfläche der Umfangsrille (41) angeordnet ist, wobei die Gürteldecklage (51) unter der Umfangsrille (41) angeordnet ist und eine axiale Breite zwischen 70 % und 200 % einer axialen Breite der Umfangsrille (41) aufweist, wobei die Gürteldecklage (51) eine verstärkte Karkassenlage oder eine Lage, die ein Gewebe umfasst, ist, **dadurch gekennzeichnet, dass** (i) die Gürteldecklage (51) ein getauchtes Gewebe, ein gewebtes Material oder ein Vliesmaterial umfasst; und/oder dadurch, dass (ii) die Lauffläche (12) eine Vielzahl von Umfangsrillen (41) umfasst, die sich jede von einer radialen Außenfläche der Lauffläche (12) radial einwärts erstrecken, wobei der Reifen (10) eine Vielzahl dieser Gürteldecklagen (51) umfasst, wobei die Gürteldecklagen (51) axial voneinander beabstandet sind, wobei die mindestens zwei, drei oder alle der Vielzahl axial voneinander beabstandeter Gürteldecklagen (51) unter einer jeweiligen Umfangsrille (41) angeordnet sind, wobei jede der Gürteldecklagen (51) eine axiale Breite aufweist, die zwischen 70 % und 200 % einer axialen Breite der betreffenden Umfangsrille (41) entspricht, und wobei die Anzahl axial voneinander beabstandeter Gürteldecklagen (51) weniger oder mehr als die Anzahl von Umfangsrillen (41) beträgt.

2. Luftreifen nach Anspruch 1, wobei die Gürteldecklage (51) eine axiale Breite aufweist, die zwischen 80 % und 130 % der axialen Breite der Umfangsrille (41) entspricht.

3. Luftreifen nach Anspruch 1, wobei die Gürteldecklage (51) eine axiale Breite aufweist, die zwischen 90 % und 120 % der axialen Breite der Umfangsrille (41) entspricht.

4. Luftreifen nach Anspruch 1, wobei die Gürteldecklage (51) eine axiale Breite aufweist, die zwischen 100 % und 130 % der axialen Breite der Umfangsrille (41) entspricht.

5. Luftreifen nach Anspruch 1, wobei die Gürteldecklage (51) eine axiale Breite aufweist, die zwischen 105 % und 120 % der axialen Breite der Umfangsrille (41) entspricht.

6. Luftreifen nach mindestens einem der vorhergehenden Ansprüche, wobei die Gürteldecklage (51) eine verstärkte Karkassenlage ist, die parallele Korde umfasst, die im Bereich zwischen -5 Grad bis +5 Grad, alternativ zwischen -1 Grad bis +1 Grad, bezüglich einer Äquatorebene des Luftreifens (10) ausgerichtet sind.

7. Luftreifen nach mindestens einem der vorhergehenden Ansprüche, wobei die Gürteldecklage (51) ein Gewebe umfasst, das aus der Gruppe ausgewählt ist, bestehend aus: einem getauchten kalanderten gewebten Material, einem getauchten kalanderten Vliesmaterial, einem getauchten nichtkalanderten gewebten Material, und einem getauchten nichtkalanderten Vliesmaterial.

8. Luftreifen nach mindestens einem der vorhergehenden Ansprüche, wobei die Gürteldecklage (51) ein Material umfasst, bestehend aus einem oder mehreren von: Polyester, Polyketon, Polybenzobisoxazol (PBO), Nylon, Aramid, Rayon, einem Metall, einem hochfesten Stahl, einem superhochfesten Stahl, einem ultrahochfesten Stahl oder einem megahochfesten Stahl.

9. Luftreifen nach mindestens einem der vorhergehenden Ansprüche, wobei die Gürteldecklage (51) umfasst:
(i) ein Material, bestehend aus zwei, drei oder mehr von Polyester, Polyketon, Polybenzobisoxazol (PBO), Nylon, Aramid und Rayon; oder
(ii) einem Material, bestehend aus einem, zwei oder mehr von:
Polyester, Polyketon, Polybenzobisoxazol (PBO), Nylon, Aramid, Rayon, hochfestem Stahl, superhochfestem Stahl, ultrahochfestem Stahl und megahochfestem Stahl; oder
(iii) ein Material, bestehend aus mindestens einem von Polyester, Polyketon, Polybenzobisoxazol (PBO), Nylon, Aramid und Rayon, und bestehend aus mindestens einem von hochfestem Stahl, superhochfestem Stahl, ultrahochfestem Stahl und megahochfestem Stahl.

10. Luftreifen nach mindestens einem der vorhergehenden Ansprüche, wobei die Karkassenlage (14) um jeden Wulstkern (28a, 28b) herumgeschlagen ist und ein Paar Karkassenlagenumschläge aufweist, die jeder im Wesentlichen an die Karkassenlage (14) von den Wulstkernen zu radial äußeren Enden des Paars von Karkassenlagenumschlägen angrenzend sind.

11. Luftreifen nach Anspruch 1, wobei jede der Gürteldecklagen (51) eine axiale Breite aufweist, die zwischen 80 % und 130 %, alternativ 90 % bis 120 %, 100 % bis 130 % oder 105 % bis 120 % der axialen Breite der betreffenden Umfangsrille (41) entspricht.

12. Luftreifen nach Anspruch 1 oder 11, wobei die Gürteldecklage (51) das getauchte Gewebe, das gewebte Material oder das Vliesmaterial umfasst und wobei die Anzahl axial voneinander beabstandeter Gürteldecklagen (51) der Anzahl von Umfangsrillen (41) entspricht.

13. Luftreifen nach Anspruch 1 oder 11, wobei die Anzahl axial voneinander beabstandeter Gürteldecklagen (51) 1 oder 2 weniger als die Anzahl von Umfangsrillen (41) beträgt; oder wobei die Anzahl axial voneinander beabstandeter Gürteldecklagen (51) 1 oder 2 mehr als die Anzahl von Umfangsrillen (41) beträgt.

14. Luftreifen nach mindestens einem der vorhergehenden Ansprüche, wobei die Lauffläche (12) eine Vielzahl von Umfangsrillen (41) umfasst, die sich von einer radial äußeren Fläche der Lauffläche (12) radial einwärts erstrecken, und wobei eine axiale Anordnung der mindestens einen Gürteldecklage (51) wahlweise asymmetrisch in Bezug auf eine Äquatorebene des Reifens (10) ist.

15. Luftreifen nach mindestens einem der vorhergehenden Ansprüche 1 bis 13, wobei die Lauffläche (12) eine Vielzahl von Umfangsrillen (41) umfasst, die sich von einer radial äußeren Fläche der Lauffläche (12) radial einwärts erstrecken, und wobei eine axiale Anordnung der mindestens einen Gürteldecklage (51) wahlweise symmetrisch in Bezug auf eine Äquatorebene des Reifens (10) ist.

## Revendications

1. Bandage pneumatique comprenant une paire de tringles de talons annulaires (28a, 28b) espacées l'une de l'autre en direction axiale ; une nappe de carcasse (14) ; une bande de roulement (12) pour sa mise en contact avec une surface de contact, la bande de roulement étant disposée en direction radiale à l'extérieur de la nappe de carcasse (14), la bande de roulement (12) possédant au moins une rainure circonférentielle (41) s'étendant en direction radiale vers l'intérieur à partir d'une surface externe de la bande de roulement (12) en direction radiale ; et une structure de ceintures disposée en direction radiale entre la nappe de carcasse (14) et la bande de roulement (12), la structure de ceintures comprenant au moins une couche de ceinture (16, 18, 20) et un revêtement comprenant au moins une couche de revêtement (51), la couche de revêtement étant disposée en direction radiale entre ladite au moins une couche de ceinture (16, 18, 20) et la surface de la rainure circonférentielle (41), située le plus à l'intérieur en direction radiale, la couche de revêtement (51) étant disposée en dessous de la rainure circonférentielle (41) et possédant une largeur axiale entre 70 % et 200 % d'une largeur axiale de la rainure circonférentielle (41) ; dans lequel la couche de revêtement (51) est une couche de nappe renforcée ou une couche comprenant une étoffe, **caractérisé en ce que** (i) la couche de revêtement (51) comprend une étoffe enduite par trempage, une étoffe tissée ou une étoffe non tissée ; et/ou **en ce que** (ii) la bande de roulement (12) comprend plusieurs rainures circonférentielles (41), chacune s'étendant en direction radiale vers l'intérieur à partir d'une surface de la bande de roulement (12), externe en direction radiale ; dans lequel le bandage pneumatique (10) comprend plusieurs desdites couches de revêtement (51) ; dans lequel lesdites couches de revêtement (51) sont espacées en direction axiale ; dans lequel au moins deux, trois ou la totalité desdites plusieurs couches de revêtement (51) espacées en direction axiale sont disposées en dessous d'une rainure circonférentielle respective (41) ; dans laquelle chacune desdites couches de revêtement (51) possède une largeur axiale correspondant à une valeur entre 70 % et 200 % d'une largeur axiale de la rainure circonférentielle respective (41) ; et dans lequel le nombre de couches de revêtement (51) espacées en direction axiale est inférieur ou supérieur au nombre des rainures circonférentielles (41).

2. Bandage pneumatique selon la revendication 1, dans lequel la couche de revêtement (51) possède une largeur axiale correspondant à une valeur entre 80 % et 130 % de la largeur axiale de la rainure circonférentielle (41).

3. Bandage pneumatique selon la revendication 1, dans lequel la couche de revêtement (51) possède une largeur axiale correspondant à une valeur entre 90 % et 120 % de la largeur axiale de la rainure circonférentielle (41).

4. Bandage pneumatique selon la revendication 1, dans lequel la couche de revêtement (51) possède une largeur axiale correspondant à une valeur entre 100 % et 130 % de la largeur axiale de la rainure circonférentielle (41).

5. Bandage pneumatique selon la revendication 1, dans lequel la couche de revêtement (51) possède une largeur axiale correspondant à une valeur entre 105 % et 120 % de la largeur axiale de la rainure circonférentielle (41).

6. Bandage pneumatique selon au moins une des revendications précédentes, dans lequel la couche de revêtement (51) est une couche de nappe renforcée comprenant des câblés parallèles orientés dans une plage entre - 5 degrés et + 5 degrés, en variante entre - 1 degré et + 1 degré, par rapport à un plan équatorial du bandage pneumatique (10).

7. Bandage pneumatique selon au moins une des revendications précédentes, dans lequel la couche de revêtement (51) comprend une étoffe choisie parmi le groupe constitué par : une étoffe tissée calandrée enduite par trempage, une étoffe non tissée calandrée enduite par trempage, une étoffe tissée non calandrée enduite par trempage, et une étoffe non tissée non calandrée enduite par trempage.

8. Bandage pneumatique selon au moins une des revendications précédentes, dans lequel la couche de revêtement (51) comprend une matière constituée par une plusieurs matières choisies parmi le groupe comprenant : du polyester ; une polycétone ; du polybenzobisoxazole (PBO) ; du nylon ; de l'aramide ; de la rayonne ; un métal ; un acier à haute résistance ; un acier à super résistance ; un acier à ultra résistance ; ou un acier à méga résistance.

9. Bandage pneumatique selon au moins une des revendications précédentes, dans lequel la couche de revêtement (51) comprend :
(i) une matière constituée par deux, trois matières ou plus choisies parmi du polyester; une polycétone ; du polybenzobisoxazole (PBO) ; du nylon ; de l'aramide ; et de la rayonne ; ou
(ii) une matière constituée par deux, trois matières ou plus choisies parmi du polyester; une polycétone ; du polybenzobisoxazole (PBO) ; du nylon ; de l'aramide ; de la rayonne ; de l'acier à haute résistance; de l'acier à super résistance; de l'acier à ultra résistance ; et de l'acier à méga résistance ; ou
(iii) une matière constituée par au moins une matière choisie parmi le groupe comprenant du polyester; une polycétone; du polybenzobisoxazole (PBO) ; du nylon ; de l'aramide ; de la rayonne ; et constituée par au moins une matière choisie parmi de l'acier à haute résistance ; de l'acier à super résistance ; de l'acier à ultra résistance ; et de l'acier à méga résistance.

10. Bandage pneumatique selon au moins une des revendications précédentes, dans lequel la nappe de carcasse (14) vient s'enrouler autour de chaque tringle de talon (28a, 28b) et possède une paire de retournements de nappe de carcasse, chacun étant essentiellement contigu à la nappe de carcasse (14), à partir des tringles de talons jusqu'aux extrémités externes de la paire de retournements de nappe de carcasse, en direction radiale.

11. Bandage pneumatique selon la revendication 1, dans lequel chacune desdites couches de revêtement (51) possède une largeur axiale correspondant à une valeur entre 80 % et 130 %, on variante entre 90 % et 120 %, entre 100 % et 130 % ou entre 105 % et 120 % de la largeur axiale de la rainure circonférentielle respective (41).

12. Bandage pneumatique selon la revendication 1 ou 11, dans lequel la couche de revêtement (51) comprend ladite étoffe enduite par trempage, ladite étoffe tissée ou ladite étoffe non tissée, et dans lequel le nombre de couches de revêtement (51) espacées en direction axiale correspond au nombre des rainures circonférentielles (41).

13. Bandage pneumatique selon la revendication 1 ou 11, dans lequel le nombre de couches de revêtement (51) espacées en direction axiale est inférieur de 1 ou de 2 au nombre des rainures circonférentielles (41) ; ou dans lequel le nombre de couches de revêtement (51) espacées en direction axiale est supérieur de 1 ou de 2 au nombre des rainures circonférentielles (41).

14. Bandage pneumatique selon au moins une des revendications précédentes, dans lequel la bande de roulement (12) comprend plusieurs rainures circonférentielles (41) s'étendant en direction radiale vers l'intérieur à partir d'une surface de la bande de roulement (12) externe en direction radiale ; et dans lequel un arrangement axial de ladite au moins une couche de revêtement (51) est soit asymétrique rapport à un plan équatorial du bandage pneumatique (10).

15. Bandage pneumatique selon au moins une des revendications 1 à 13, dans lequel la bande de roulement (12) comprend plusieurs rainures circonférentielles (41) s'étendant en direction radiale vers l'intérieur à partir d'une surface de la bande de roulement (12) externe en direction radiale ; et dans lequel un arrangement axial de ladite au moins une couche de revêtement (51) est soit symétrique rapport à un plan équatorial du bandage pneumatique (10).
